# EUROPEAN PATENT SPECIFICATION

(11) **EP 4 026 964 B1**
(45) Date of publication and mention of the grant of the patent: **09.10.2024**
(21) Application number: 21216462.8
(22) Date of filing: 21.12.2021
(51) Int. Cl.: E04H 1/00, E04B 1/343, E04B 9/00, E04H 3/08, F16L 3/22

(54) **SYSTEM FOR INSTALLING A SERVICE NETWORK**
SYSTEM ZUR INSTALLATION EINES SERVICENETZES
SYSTÈME D'INSTALLATION D'UN RÉSEAU DE SERVICE

(30) Priority: 06.01.2021 GB 202100150
(43) Date of publication of application: 13.07.2022
(73) Proprietor: Merit Group Services Limited, Cramlington, Northumberland NE23 7RY (GB)
(72) Inventor: WELLS, Anthony, Cramlington, Northumberland NE23 7RY (GB)
(74) Representative: Definition IP Limited

(56) References cited:
- WO-A1-2020/252199
- US-B2- 10 123 451
- US-B2- 10 240 693

## Description

### Technical Field

The present invention relates to a system and method for installing at least one service network in a building and particularly, but not exclusively, relates to a system for installing at least one of a ventilation network, fluid supply network, electrical network and communications network.

### Background

The construction industry is known to have a chronically low level of productivity that has changed very little in the past seventy years. It is thought that the low level of productivity is a consequence of the generally accepted need for bespoke buildings to be developed for particular applications combined with 'tried-and-tested' construction methods.

Bespoke buildings typically take several years to design, construct and validate/qualify which is slow and by implication costly. Furthermore, building designs are also often subject to changes as a project progresses and, in some circumstances, building have to be further modified after completion in order to comply with a change in requirements, expansion or cost constraints.

The problem is particularly acute for research and medical facilities which often need to be constructed rapidly and which must be flexible to accommodate changes to their end use. For example, laboratory facilities such as vaccine development facilities, advanced therapy medicinal product facilities and cell and gene therapy facilities are often planned and then initiated very quickly, with a need for them to be constructed and commissioned in several months rather than several years and to be adaptable during and after construction.

In addition, once a building has been constructed, it is typically time consuming and costly to install service networks, such as ventilation systems, piping networks and electrical networks, in the building.

There is a need for a better way of constructing buildings which is rapid, low cost and flexible.

US10240693B describes a method of building a fluids processing facility comprising arranging a first level of modules and arranging a pipe rack module on a second higher level such that a longitudinal axis of the pipe rack module is oriented in a direction that is substantially normal to a longitudinal axis of the first level of modules.

Document WO 2020/252199 A1 describes a utility connection system. This document is regarded as useful to understand the invention.

### Summary of the Invention

According to a first aspect of the invention there is provided a system for installing at least one service network in a building, wherein the system comprises a plurality of self-contained service modules, each service module including a plurality of conveying components, each conveying component being configured for conveying at least one of a fluid, power and an electrical signal, and a support frame configured to be installed in a building and arranged to support the at least one conveying component, wherein each conveying component is configured for connection to a corresponding conveying component for conveying a fluid, power or an electrical signal of at least one adjacent service module of the plurality of service modules when installed in a building to form at least part of a service network in the building, and wherein at least one of the plurality of conveying components comprises a ventilation ducting assembly and at least one of the plurality of conveying components comprises a busbar.

Adjacent service modules that are positioned alongside each other may be configured such that at least one conveying component of each service module is aligned for direct connection with the corresponding conveying component of an adjacent service module for direct connection to each other. A direct connection may be the direct connection of respective connectors of each conveying component. A direct connection may also be a connection that does not rely on an intermediate conveying component or conduit. A direct connection may, for example, be a rigid connection between the conveying components.

The services modules have the same height, width and/or length.

Each support frame may comprise at least a lower level for supporting at least one conveying component, an intermediate level for supporting at least one conveying component and an upper level for supporting at least one conveying component.

Each conveying component may have a connector which is arranged to be directly connected with a corresponding connector of a corresponding conveying component of an adjacent service module that is aligned with the said at least one conveying component.

The ventilation ducting assembly may comprise at least one ventilation duct arranged to convey air across at least a portion of the service module.

The at least one ventilation duct may comprise a duct connector arranged to connect to a duct connector of a ventilation duct of said adjacent service module.

The duct connector may comprise a flange arrangement.

Duct connectors of ventilation ducts of adjacent service modules may be secured together by a clamp.

At least one of the plurality of conveying component may comprise piping for supply of at least one fluid. The piping may comprise piping for the supply of at least one gas.

The piping may comprise piping for the supply of at least one of nitrogen, oxygen, carbon dioxide, compressed air and natural gas. The piping may comprise piping for the supply of at least one liquid. The piping may comprise piping for the supply of water. The piping may comprise piping for the supply of a hydraulic fluid. The piping may comprise at least one pipe connector arranged to connect to a pipe connector of piping of an adjacent service module.

The pipe connector may comprise at least one of a flange connector, a threaded connector, a but weld connector, a coupling connector, a ferrule, a tri-clover^{™} connector and a press-fit arrangement.

The busbar may comprise a busbar connector arranged to connect to a busbar connector of a busbar of an adjacent service module.

Each service module may comprise at least one of an electrical cable tray, a cable basket, a cable trunking. Each service module may have a predetermined length, width and height.

According to a second aspect of the invention there is provided a method of installing a service network using a system as claimed in any one of the preceding claims comprising the steps installing the plurality of self-contained service modules in a building such that each service module is disposed adjacent another service module, and connecting at least one of the ventilation ducting assembly and the busbar of one of the plurality of service modules with at least one of the corresponding ventilation ducting assembly and the busbar of an adjacent service module of the plurality of service modules to form at least part of a services network in the building.

Various further features and aspects of the invention are defined in the claims.

Certain aspects of the invention provide a modular construction system which allows for a bespoke facility to be designed in a way that significantly reduces design and construction time and costs, but which retains the individuality of design that traditional modular construction systems are unable to provide.

Certain aspects of the invention provide a modular construction system that allow for a large proportion of construction work to be done offsite.

Certain aspects of the invention provide a modular construction system that is a hybrid of traditional onsite construction techniques to provide a building structure and offsite manufacturing to provide bespoke facilities in which time to completion and costs are lower than conventional onsite construction techniques.

Certain aspects of the invention provide a versatile modular construction system that allows for a facility to be reconfigured partially or wholly during design, build or subsequent operation rapidly, at low cost and with low impact.

Unless defined otherwise, all technical and scientific terms used herein have the meaning commonly understood by a person skilled in the art to which this invention belongs.

### Brief Description of the Drawings

Embodiments of the present invention will now be described by way of example only with reference to the accompanying drawings where like parts are provided with corresponding reference numerals and in which:
Figure 1 shows a first embodiment of a laboratory facility;
Figure 2 shows modules of the laboratory facility shown in Figure 1;
Figure 3 shows a laboratory module of Figure 1;
Figure 4 shows the laboratory facility showed in Figure 1;
Figure 5 shows a first embodiment of a services module;
Figure 6 shows a second embodiment of a services module;
Figure 7 shows a third embodiment of a services module;
Figure 8 shows a fourth embodiment of a services module;
Figure 9 shows a fifth embodiment of a services module;
Figure 10 shows a sixth embodiment of a services module;
Figure 11 shows a seventh embodiment of a services module;
Figure 12 shows a second embodiment of a laboratory facility;
Figure 13 shows a layout of a first floor the laboratory facility shown in Figure 12;
Figure 14 shows a layout of a second floor of the laboratory facility shown in Figure 12;
Figure 15 shows an embodiment of a facility; and
Figure 16 shows a layout of the facility shown in Figure 15.

### Detailed Description

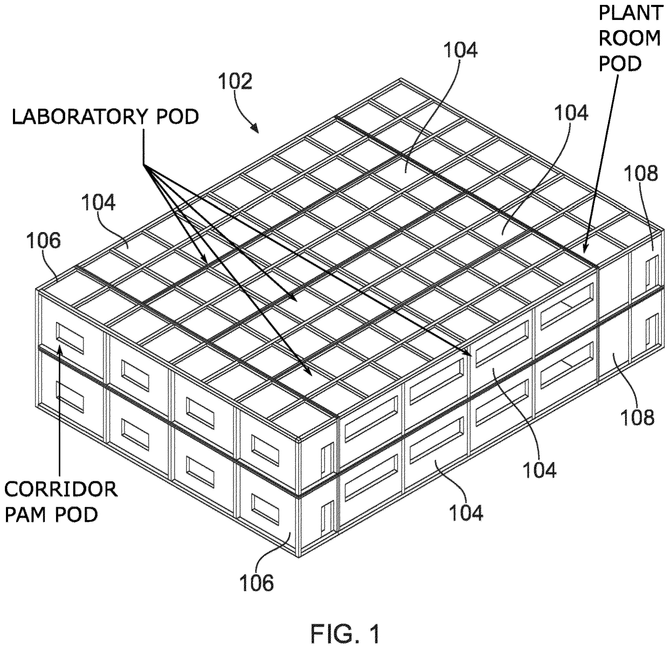

Figure 1 shows a first embodiment of a laboratory facility 102 fabricated using a modular building construction system. The laboratory facility 102 comprises a plurality of primary function modules in the form of laboratory pods 104, two transition modules in the form of corridor pods 106 and two support modules in the form of plant room pods 108.

The laboratory pods 104 are arranged in pairs, one above the other. Each pair is arranged adjacent another pair of laboratory pods 104. There are 8 laboratory pods 104 in total.

The two corridor pods 106 are arranged one above the other and are disposed at the ends of the laboratory pods 104 and are configured to allow people, such as laboratory staff, to move between the laboratory pods 104 via the corridor pods 106. Each corridor pod 106 defines a corridor or part of a corridor through which persons can move.

The plant room pods 108 are also arranged one above the other and are disposed at the ends of the laboratory pods 104 opposite the ends at which the corridor pods 106 are disposed. The plant room pods 108 are self-contained with easy access at the side of the laboratory facility 102, and can be configured to accommodate plant machinery that supplies selected other pods. This approach can be used to decentralise systems such as ventilation systems which, in turn, can reduce overall energy consumption. Each plant room pod 108 provides a room or multiple rooms in which services equipment such as plant machinery, for example a heating, ventilation and air conditioning (HVAC) system, may be located.

The facility 102 has a lower first floor (i.e. a ground floor) and an upper second floor, each floor having four laboratory pods 104 connected by a corresponding corridor pod 106, and a plant room pod 108.

Each floor (i.e. the upper and lower floors) is self-contained in the sense that services are supplied from a plant room pod 108 on the same floor. This allows for floors of the facility 102 to be repurposed and reconfigured with negligible impact on other floors.

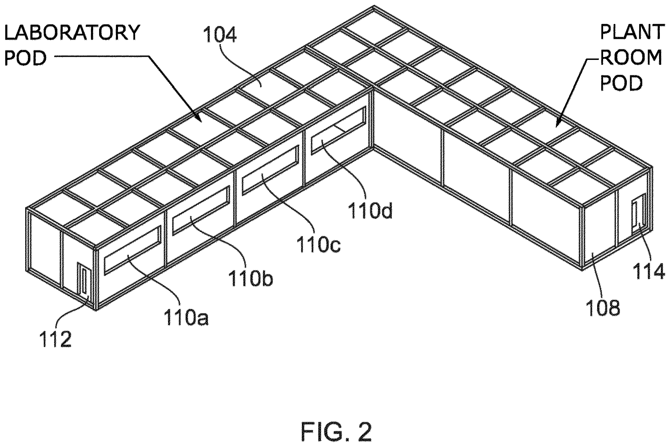

Figure 2 shows a laboratory pod 104 adjacent a plant room pod 108 of Figure 1 in isolation. The laboratory pod 104 comprises four windows 110a, 110b, 110c, 110d and a door 112 at the end that is adjacent the corridor pod 106. The plant room pod 108 comprises a door 114.

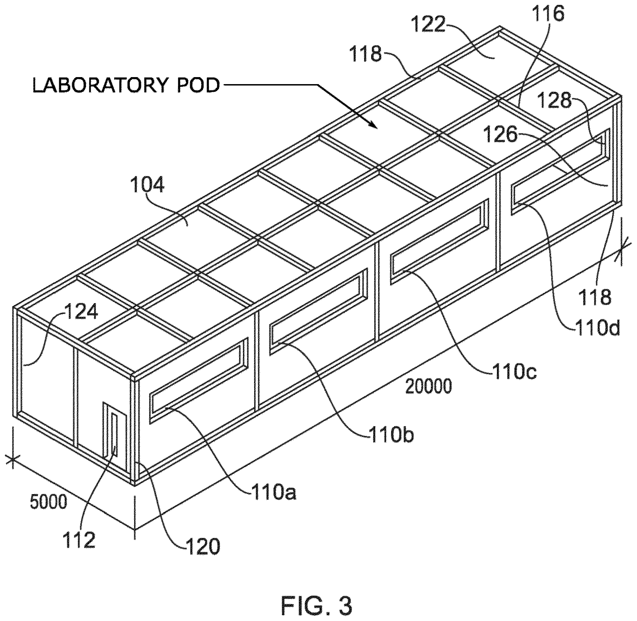

With reference to Figure 3, each laboratory pod 104 is fabricated from a plurality of beams 116, 118, uprights 120 and panels 122, 124, 126 having standard dimensions. That is to say each beam 116, 118, upright 120 and panel 122, 124, 126 (only one example of each component has been indicated with a reference sign for clarity) has a dimensions, such as length, width and thicknesses, which are not specific to the laboratory pod 104 constructed. The panels 122, 124, 126 may be made of a material certified for a clean-room application and may be resistant to vapourised hydrogen peroxide to allow them to be disinfected using vapourised hydrogen peroxide. Each laboratory pod 104 provides a laboratory room in which laboratory equipment may be disposed.

In the embodiment shown, the laboratory pod 104 has a length off 20 metres (m), a width of 5 metres (m) and a height of 4.2 metres (m), and so is configured to a standard size that can be transported using conventional road haulage.

The laboratory pod 104 is fabricated from twelve uprights 120, five uprights 120 on one side, five uprights 120 on the other side, and one additional upright 120 at each end. Longitudinal beams 118 extend along each side, respectively, both top and bottom. Lateral beams 116 extend laterally from each side beam to a central longitudinal beam. The beams 116, 118 therefore form an open framework having openings between the beams for receiving the panels 122, 124, 126.

Ceiling panels 122 are provided between the lateral beams 116 and the longitudinal beams 118. End panels 124 are provided between the uprights 120 at the ends of the laboratory pod 104. The door 112 is provided in the panel 124 on the right hand side as viewed in Figure 3. Windowed panels 126 are provided between the uprights 120 along each side of the laboratory pod 104. Each windowed panel 126 has an elongate window 128 provided in it.

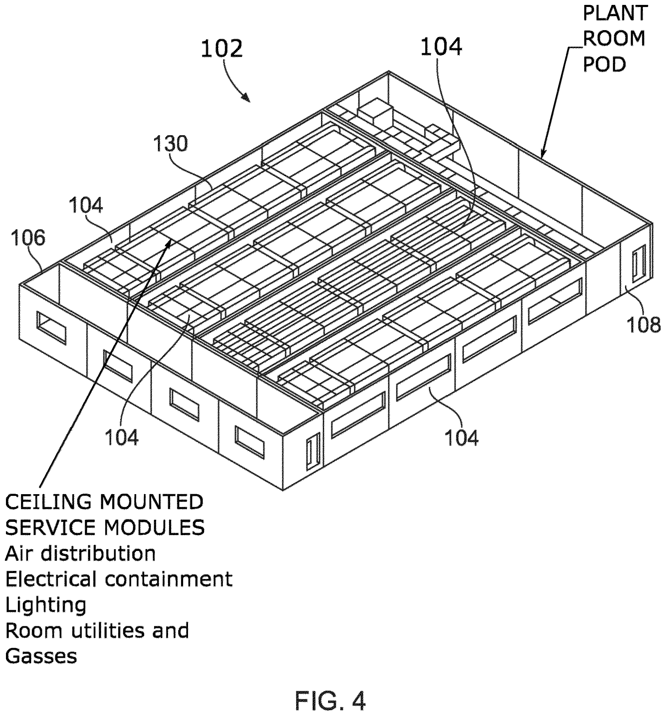

Figure 4 shows the laboratory facility 102 shown in Figure 1 with the ceiling panels 122 of the laboratory pods 104, corridor pods 106, and plant room pods 108 absent. Each laboratory pod 104 is provided with a plurality of ceiling mounted service modules 130.

A service module 130 is a prefabricated module that may comprise any one or more ventilation ducts, electrical cable trays, lighting connectors, room utilities and piping for delivery of fluids, particularly gases. Each service module 130 has a preconfigured arrangement and is configured to occupy a space immediately below a ceiling panel 122 or to occupy a space immediately below a plurality of ceiling panels 122 which corresponds to an exact number of ceiling panels 122.

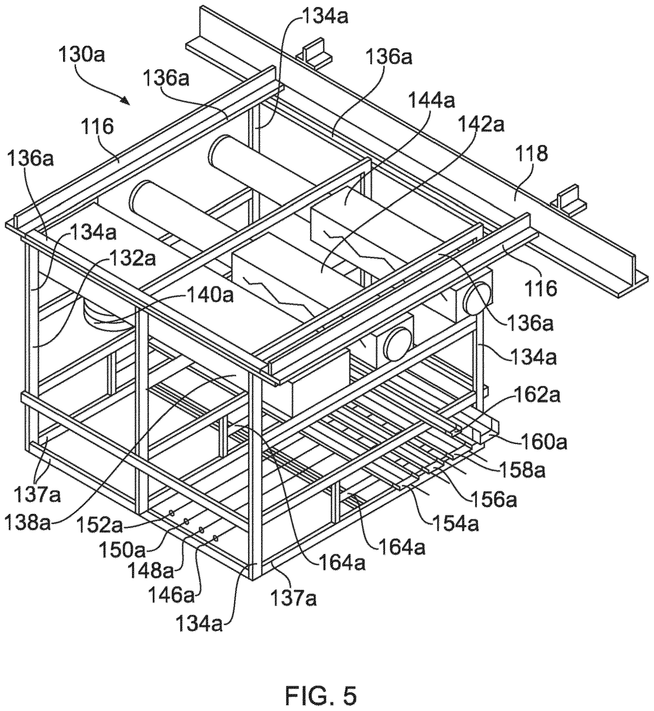

Figure 5 shows a first embodiment of a service module 130a. The service module 130a comprises a support framework 132a having support uprights 134a and upper and lower support beams 136a, 137a. The support beams 136a, 137a extend laterally and are connected to the support uprights 134a to provide structural rigidity. The support uprights 134a and upper and lower support beams 136a, 137a may comprise met-strut 41x41 or 82x41 configurations which are assembled by welding the met-struts together. Support uprights 134a and upper and lower support beams 136a, 137a may, however, be fabricated for specific loading requirements based on standard British steel sizes which may then be welded or bolted together.

The upper support beams 136a are configured to be secured to the lateral beams 116 of the laboratory pod 104 such that the service module 130a is suspended below the lateral beams 116. The service module 130a has a size and shape which corresponds to the size and shape of ceiling panel 122 and so fits directly under a ceiling panel 122 without protruding laterally from beneath it. This allows service modules 130 to be placed in close proximity to each other under adjacent ceiling panels 122 which, in turn, allows for conveying components such as ventilation ducting, cable trays and piping of adjacent service modules to be connected directly to each other.

A first air supply ventilation duct 138a is suspended below the upper support beams 136a. The first air supplied ventilation duct 138a has a downwardly facing outlet 140a.

A second air supply ventilation duct 142a is suspended below the upper support beams 136a adjacent the first air supply ventilation duct 138a.

An air extract ventilation duct 144a is also suspended below the upper support beams 136a adjacent the second air supply ventilation duct 142a.

The ventilation ducts 138a, 142a, 144a are arranged such that they can be connected to ducts of an adjacent service module with which they align. In the present embodiment, each ventilation duct 138a , 142a, 144a comprises a connector at each open end in the form of a flange arrangement that is configured to be directly connected to a corresponding duct of an adjacent service module having a corresponding flange arrangement. For instance, when the services modules are installed, the respective flange arrangements are brought into pressing engagement with each other. The flange arrangements are then held together by clamping means, such as a G-clamp, to provide an air-tight connection. An example of a suitable connector arrangement is a slide-on and crimp flange connector system.

Each ventilation duct 138a , 142a, 144a may comprise one or more of the following features: straight ducting, bend ducting, such as an elbow for changing the direction in which a duct extends, a reducer, manual and/or automatic dampers (which may be electrically, hydraulically or pneumatically actuated), attenuators, heater batteries, temperature transmitters and gas-tight dampers. The ducts may be any suitable configuration including ducts having a rectangular cross-section, circular cross-section, a spiral configuration, or a combination of these depending on requirements. Ducting may also be provided for exhausting specific gases arising from processes.

Fluid supply pipes comprising an oxygen supply pipe 146a, a nitrogen supply pipe 148a, a compressed air supply pipe 150a, and a carbon dioxide supply pipe 152a are connected to lower support beams 136a such that they extend horizontally. The fluid supply pipes 146a, 148a, 150a, 152a are arranged such that they can be directly connected at each of their ends to fluid supply pipes of an adjacent service module with which they align. The fluid supply pipes 146a, 148a, 150a, 152a turn through right angles in a horizontal plane as they extend through the service module 130a.

There may also be provided supply and return pipes for various services and/or pneumatic systems including low-temperature hot water, reverse osmosis, process cooling water, chilled water, boosted cold water, hot water, water for injection, such as high pressure water and/or natural gas. Each pipe is provided with a connector arranged to connect to a connector of a corresponding pipe in an adjacent services module. Such a connector may comprise a flange connector, threaded connector, welded connection, coupling connector, ferule and tri-clover^{™} connector or a press-fit connection depending on requirements and suitability.

The pipes may also comprise bend sections, such as elbows, for changing the direction in which a pipe extends, reducers, valves and/or inline instrumentation. Pipes may be fabricated from suitable materials including stainless steel, such as 304 and 316L, ASME BPE, schedule carbon steel and copper.

Cable trays 154a, 156a, 158a, 160a, 162a are connected to auxiliary support beams 164a that are situated above the lower support beams 137a and so provide an intermediate level for supporting the cable trays 154a, 156a, 158a, 160a, 162a. The cable trays 154a, 156a, 158a, 160a, 162a are arranged to allow electrical cables to be laid along them and can be aligned with cable trays of an adjacent service module having similarly configured cable trays. The cable trays 154a, 156a, 158a, 160a, 162a may comprise light, medium and/or heavy-duty cable trays. There may also be provided other cable containment and associated component(s) including ladder rack(s), cable basket(s) and/or cable trunking.

In an alternative embodiment, one or more busbars may be provided to distribute electrical services as an alternative or addition to cables. Such services include, low-voltage and high-voltage distribution, data distribution and retrieval, including communication networks, lighting power distribution, Environmental Monitoring System (EMS) distribution and Building Management System (BMS) distribution. The busbars are arranged such that they are aligned with at least one respective busbar of an adjacent service module such that the busbars of adjacent service modules can be connected directly to each other by a suitable connector such as a busbar end feed connector.

Other electrical components that may be supported by the service module include bends/elbows, tee pieces, reducers, joining plates, junction boxes, end feed units, tap off units, junction blocks, distribution boards, remote ethernet IO modules, control panels.

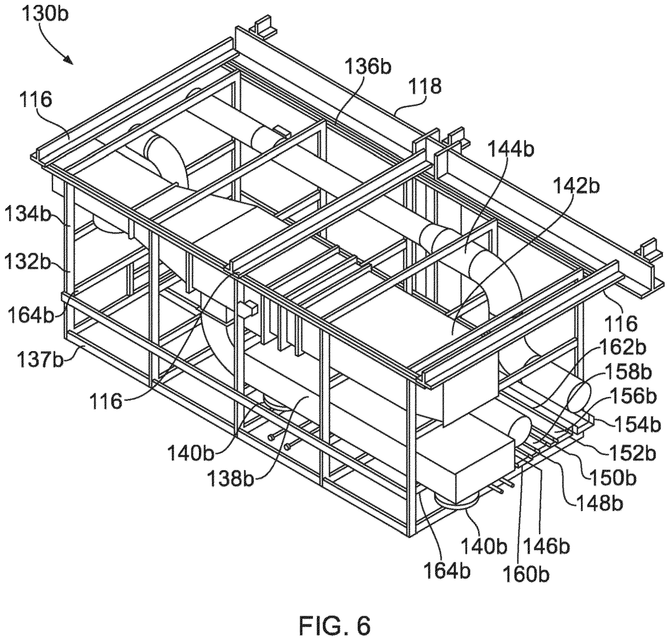

Figure 6 shows a second embodiment of a service module 130b. The service module 130b is similar to the first embodiment in that it comprises a support framework 132b having support uprights 134b and upper and lower support beams 136b, 137b. The support beams 136b, 137b extend laterally and are connected to the support uprights 134b to provide structural rigidity.

The upper support beams 136b are configured to be secured to the lateral beams 116 of the laboratory pod 104 such that the service module 130b is suspended underneath the lateral beams 116. The support beams 136b, 137b are approximately double the length of the support beams of the first embodiment of service module 130a shown in Figure 5. The service module 130b therefore has a size and shape which corresponds to the size and shape of two adjacent ceiling panels 122 and so fits directly under two adjacent ceiling panels 122 without protruding laterally from beneath them.

A first air supply ventilation duct 138b is suspended below the upper support beams 136b. The first air supplied ventilation duct 138a has downwardly facing outlets 140b.

A second air supply ventilation duct 142b is suspended below the upper support beams 136b adjacent the first air supply ventilation duct 138b.

An air extract ventilation duct 144b is also suspended below the upper support beams 136a adjacent the second air supply ventilation duct 142b.

The first air supply ventilation duct 138b extends longitudinally within the service module 130b. The second air supply ventilation duct 142b and the air extract ventilation duct 144b are configured to bend within the service module 130b such that the ends of the ducts 142b, 144b are at different height within the service module 130b. The ducts 138b, 142b, 144b are arranged such that they can be connected to ducts of an adjacent service module with which they align.

Fluid supply pipes comprising an oxygen supply pipe 146b, a nitrogen supply pipe 148b, a compressed air supply pipe 150b, and a carbon dioxide supply pipe 152b are connected to lower support beams 136b such that they extend horizontally. The fluid supply pipes 146b, 148b, 150b, 152b are arranged such that they can be connected at each of their ends to air supply pipes of an adjacent service module with which they align. The fluid supply pipes 146b, 148b, 150b, 152b extend longitudinally within the service module 130b.

Cable trays 154b, 156b, 158b, 160b, 162b are connected to auxiliary support beams 164b that are situated above the lower support beams 137b. The cable trays 154b, 156b, 158b, 160b, 162b are arranged to allow electrical cables along them and can be aligned with cable trays of an adjacent service module having similarly configured cable trays.

It will be appreciated that a service module 130 may be configured to a desired specification. The service modules may have predefined standard unit widths, lengths and heights. The widths and lengths may vary between service modules, but do so in predefined increments that correspond to a unit width. For example, the first embodiment of a service module 130a (shown in Figure 5) which occupies the space under a single ceiling panel 122 may be considered to have a single unit width and a single unit length. The second embodiment of a service module 130b (shown in Figure 6) which occupies the space under two ceiling panels 122 may be considered to have a single unit width and a double unit length.

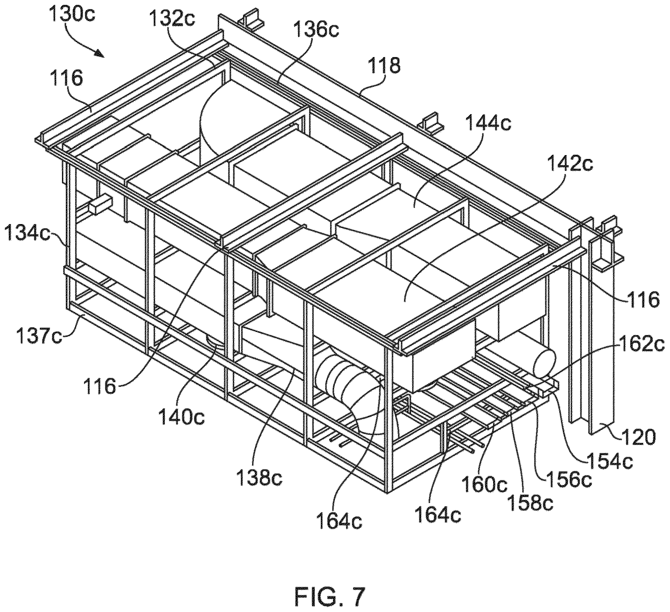

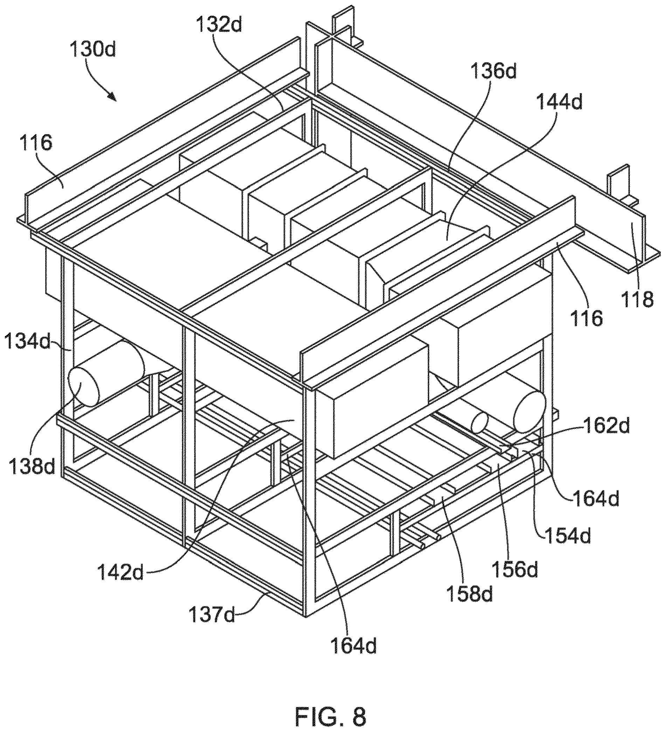

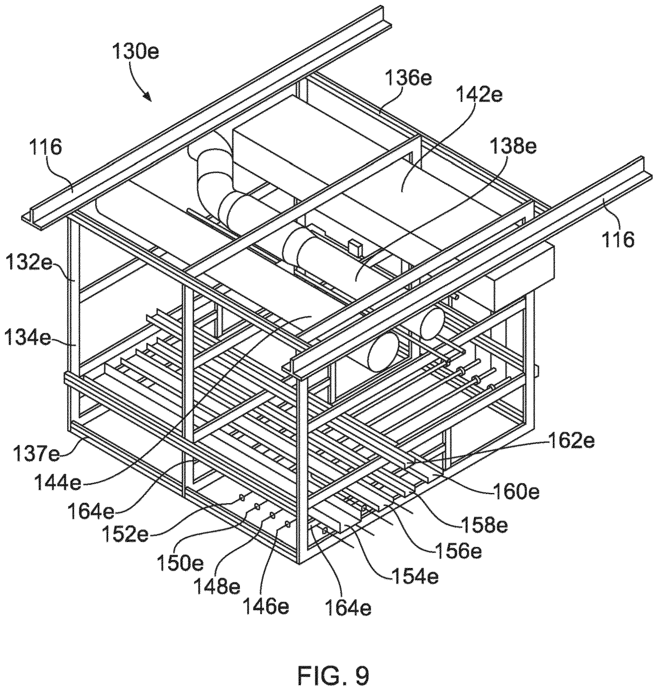

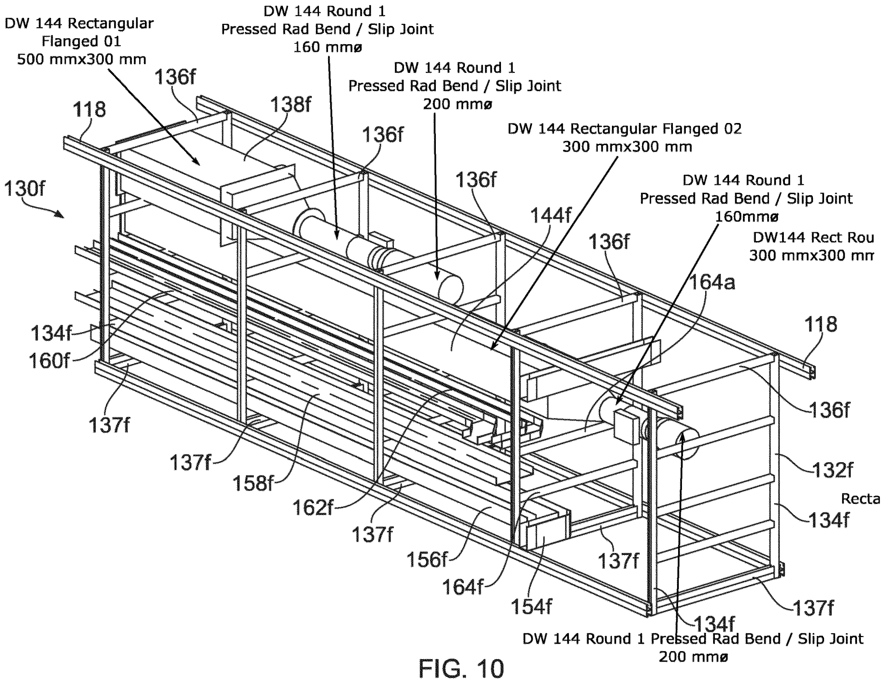

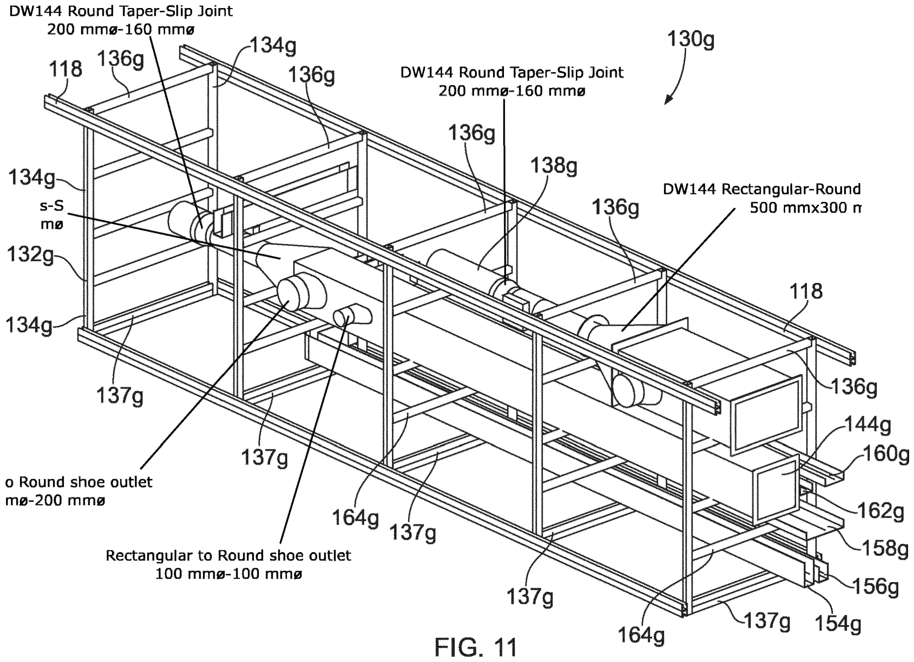

Figures 7, 8, 9, 10 and 11 show third, fourth, fifth, sixth and seventh embodiments of a service module 130c, 130d, 130e, 130f, 130g.

The third embodiment 130c has a unit width and a double unit length. The fourth and fifth embodiments 130d, 130e have a single unit width and a unit length. The fifth and embodiments 130f, 130g have a single unit width and a quadruple unit length.

Each embodiment 130c, 130d, 130e, 130f, 130g has components that correspond to at least some of the components of the first and second embodiments 130a, 130b. The components take the same reference numbers with the relevant letter for each embodiment. The embodiments illustrate how the various components may be arranged in accordance with a specification. For example, cable trays may be arranged two extend perpendicularly with respect to each other or to have bends in them.

The system provides a means by which ducting, cable, pipes and connectors can be preassembled in modules in accordance with a desired layout whereupon the service modules when connected to a laboratory pod 102 follow a desired layout. Multiple service networks can therefore be installed in a predetermined layout by installing the preassembled service modules. This allows for a substantially proportion of the network to be assembled remotely from the building in which it is to be installed and provides a significant reduction in installation time on-site.

By providing ceiling mounted service modules 130, ready access is provided to services from above through the ceiling of the laboratory pod 102, such as cables, piping and ducting, which greatly reduces the time taken for installation of services (e.g. traditional first and second 'fix' services) and commissioning.

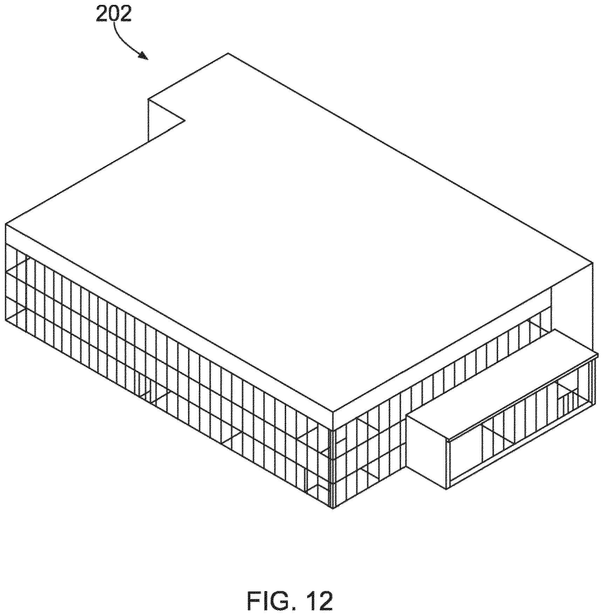

Figure 12 shows a second embodiment of a laboratory facility 202 fabricated using a modular building construction system. The facility 202 is a hybrid arrangement fabricated using a combination of conventional building techniques and a modular building construction system.

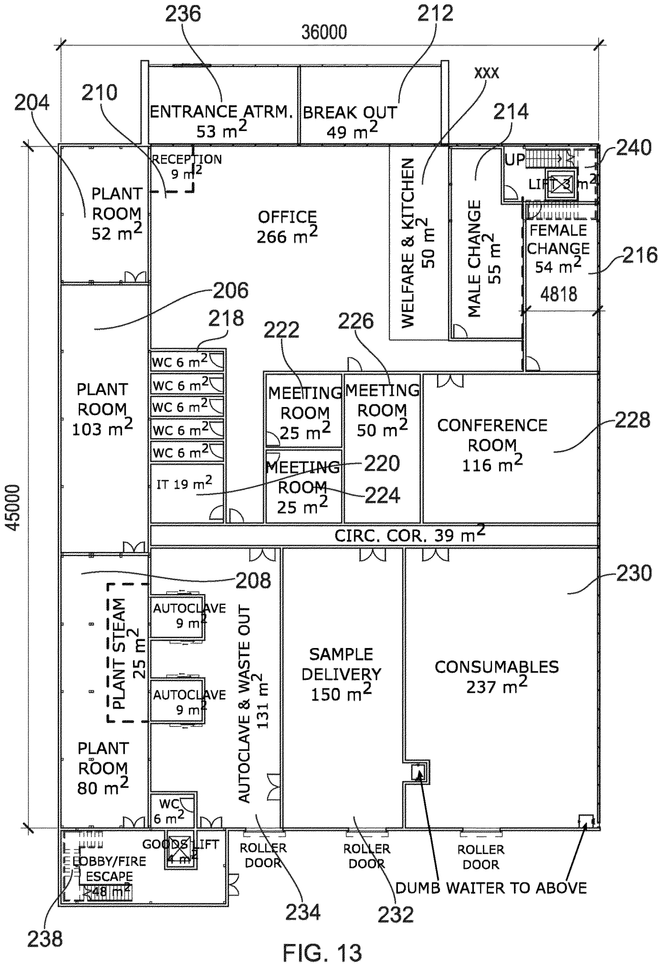

Figure 13 shows a layout of a first floor (the ground floor) of the laboratory facility 202 shown in Figure 12. The first floor of the laboratory facility 202 comprises three support modules in the form of first, second and third plant room pods 204, 206, 208 which are positioned adjacent a conventional building structure 203.

The conventional building structure 203 includes an office room 210, which provides office space, a reception space and also a dedicated space preparing food and beverages, each of which may be sub-divisions of the office room 210; a break out room 212, which provides an informal meeting space annexed to the office room 210; a male change room 214, which provides a space for male personnel to change attire; a female change room 216, which provides a space for female personnel to change attire; a water closet room 218, which is subdivided to provide individual toilet cubicles; a computer hardware room 220, which provides a space for accommodating computer hardware; first, second and third meeting room 222, 224 226, which provide private meeting spaces; a conferencing room 228, which provides a conferencing space; a consumables room 230, which provides a storage facility for consumables used in the laboratories such as bottles, carboys, centrifuge tubes, vials slides and petri dishes and which may be transferred to the laboratories as required; a sample delivery room 232, which is where specimens are delivered, catalogued and stored awaiting testing in the laboratories; and an autoclave and waste out room 234, in which waste from laboratories is sorted and stored, and in which re-useable utensils are processed and sterilised using an autoclave washer before being catalogued to the consumables room 230.

The conventional building structure 203 also includes an entrance room 236, a first stairwell 238 and a second stairwell 240.

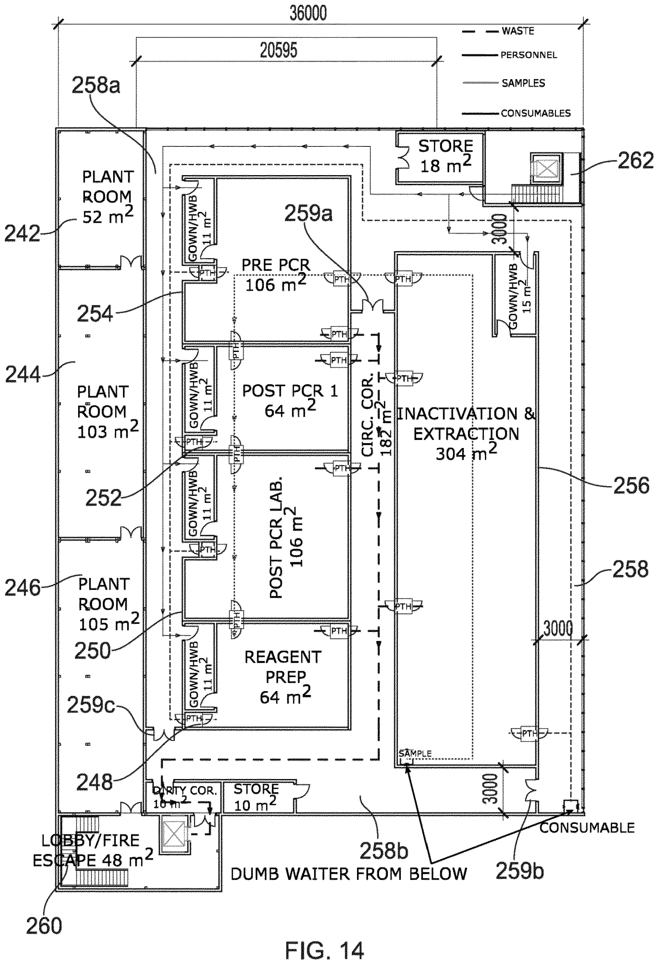

Figure 14 shows a layout of a second floor (an upper floor) of the laboratory facility 202 shown in Figure 12. The second floor of the laboratory facility 202 comprises three support modules in the form of fourth, fifth and sixth plant room pods 242, 244, 246 which are positioned adjacent the building structure 203 and above the first, second and third plant rooms 204, 206, 208.

The second floor of the conventional building structure 203 includes first, second, third, fourth and fifth laboratory rooms 248, 250, 252, 254, 256. Each laboratory room 248, 250, 252, 254, 256 is subdivided into a gowning space and a laboratory space.

The conventional building structure 203 also comprises a first corridor 258 which extends around the laboratory rooms 248, 250, 252, 254, 256 and also has a portion which extends between the first, second, third and fourth laboratory rooms 248, 250, 252, 254, which are positioned in a line adjacent one another, and the fifth laboratory room 256. The corridor 258 is subdivided by three doors 259a, 259b, 259c to form an 'entrance' corridor 258a and an 'exit' corridor 258b.

The conventional building structure 203 also comprises a third stairwell 260, which is disposed directly above and adjoins the first stairwell 238 to form a single stairwell between the first and second floors, and a second stairwell 262 which is disposed directly above and adjoins the second stairwell 240 to form a single stairwell between the first and second floors.

Each plant room pod is fabricated using uprights, longitudinal and lateral beams, and panels having standard configurations such as those used in the fabrication of the laboratory pod 104 described with reference to Figure 3, and is equipped with service modules, as required.

The plant room pods 204, 206, 208, 242, 244, 246 may be assembled off-site away from the conventional building structure 203 before being transported to the building location and loated in position adacent the conventional building structure 203, as shownin Figures 13 and 14. Once in position the plant room pods 204, 206, 208, 242, 244, 246 are joined with the conventional building structure and clad with a suitable cladding system that is the same as the cladding system used for the conventional building structure 203 so as to create the appearance of an integrated facility 202.

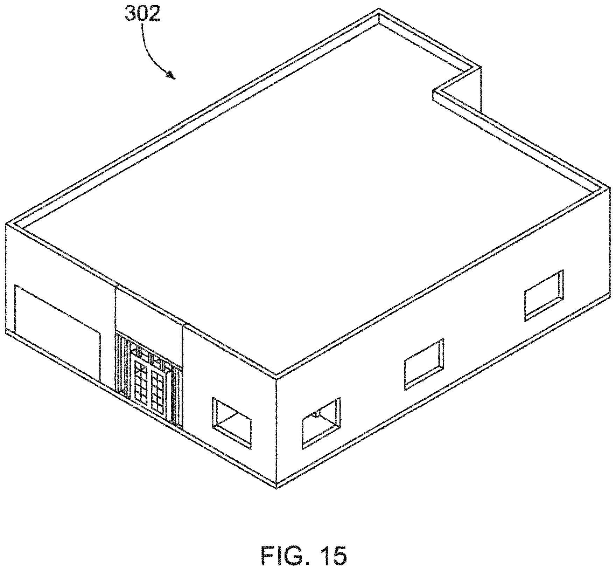

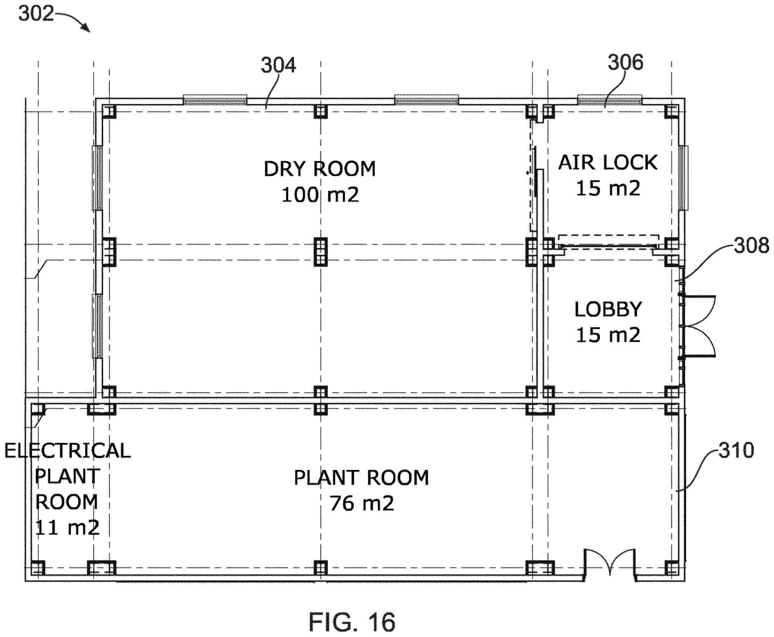

Figures 15 and 16 show a facility having a single primary function module in the form of a dry room pod 304; two transition modules in the form of an air lock module 306 and a lobby module 308; and a support module in the form of a plant room pod 310. Each pod is fabricated using uprights, longitudinal and lateral beams, and panels having standard configurations such as those used in the fabrication of the laboratory pod 104 described with reference to Figure 3, and is equipped with service modules, as required.

The modular building construction system may be used for a range of applications including the fabrication of medical, research and manufacturing facilities. For example, the modular building construction system may be used to construct vaccine development facilities, cell gene therapy facilities and advanced therapy medicinal product facilities.

Buildings may use heat recovery, heat pumps and integrated solar panels to reduce or eliminate carbon dioxide emissions. The modular building construction system may reduce the amount of space (area) required for a plant room by 50% or more.

The invention is defined by the appended claims.

## Claims

1. A system for installing at least one service network in a building, wherein the system comprises a plurality of self-contained service modules (130), each service module (130) including:
a plurality of conveying components, each conveying component being configured for conveying at least one of a fluid, power and an electrical signal, and
a support frame (132a) configured to be installed in a building and arranged to support the at least one conveying component,
wherein each conveying component is configured for connection to a corresponding conveying component for conveying a fluid, power or an electrical signal of at least one adjacent service module of the plurality of service modules (130) when installed in a building to form at least part of a service network in the building, and
wherein
at least one of the plurality of conveying components comprises a ventilation ducting assembly (138a, 142a, 144a) and **characterised in that** at least one of the plurality of conveying components comprises a busbar.

2. The system of any one of the preceding claims, wherein adjacent service modules (130) that are positioned alongside each other are configured such that at least one conveying component of each service module (130) is aligned for direct connection with the corresponding conveying component of an adjacent service module (130) for direct connection to each other.

3. The system of any one of the preceding claims, wherein the services modules (130) have the same height, width and/or length.

4. The system of any one of the preceding claims, wherein each support frame (132a) comprises at least a lower level for supporting at least one conveying component, an intermediate level for supporting at least one conveying component and an upper level for supporting at least one conveying component.

5. The system of any one of the preceding claims, wherein each conveying component has a connector which is arranged to be directly connected with a corresponding connector of a corresponding conveying component of an adjacent service module (130) that is aligned with the said at least one conveying component.

6. The system of claim 1, wherein the ventilation ducting assembly (138a, 142a, 144a) comprises at least one ventilation duct (138a, 142a, 144a) arranged to convey air across at least a portion of the service module (130).

7. The system of claim 6, wherein the at least one ventilation duct (138a, 142a, 144a) comprises a duct connector arranged to connect to a duct connector of a ventilation duct (138a, 142a, 144a) of said adjacent service module.

8. The system of claim 7, wherein the duct connector comprises a flange arrangement.

9. The system of claim 8, wherein duct connectors of ventilation ducts (138a, 142a, 144a) of adjacent service modules are secured together by a clamp.

10. The system of any one of the preceding claims, wherein at least one of the plurality of conveying component comprises piping (146a, 148a, 150a, 152a) for supply of at least one fluid, and wherein the piping optionally comprises piping for the supply of at least one gas, and wherein the piping optionally comprises piping for the supply of at least one of nitrogen, oxygen, carbon dioxide, compressed air and natural gas, and wherein the piping optionally comprises piping for the supply of at least one liquid, and wherein the piping optionally comprises piping for the supply of water, and/or wherein the piping optionally comprises piping for the supply of a hydraulic fluid.

11. The system of any one of claim 10, wherein the piping (146a, 148a, 150a, 152a) comprises at least one pipe connector arranged to connect to a pipe connector of piping of an adjacent service module, and wherein the pipe connector optionally comprises at least one of a flange connector, a threaded connector, a but weld connector, a coupling connector, a ferrule, a tri-clover^{™} connector and a press-fit arrangement.

12. The system of any one of the preceding claims, wherein the busbar comprises a busbar connector arranged to connect to a busbar connector of a busbar of an adjacent service module.

13. The system of any one of the preceding claims, wherein each service module (130) comprises at least one of an electrical cable tray (154a, 156a, 158a, 160a, 162a), a cable basket, a cable trunking, and/or wherein each service module (130) optionally has a predetermined length, width and height.

14. A method of installing a service network using a system as claimed in any one of the preceding claims comprising the steps:
installing the plurality of self-contained service modules (130) in a building such that each service module (130) is disposed adjacent another service module, and
connecting at least one of the ventilation ducting assembly and the busbar of one of the plurality of service modules (130) with at least one of the corresponding ventilation ducting assembly and the busbar of an adjacent service module (130) of the plurality of service modules to form at least part of a services network in the building.

## Patentansprüche

1. System zum Installieren mindestens eines Servicenetzwerks in einem Gebäude, wobei das System eine Vielzahl von eigenständigen Servicemodulen (130) umfasst, wobei jedes Servicemodul (130) Folgendes einschließt:
eine Vielzahl von Förderkomponenten, wobei jede Förderkomponente für das Fördern von mindestens einem von einem Fluid, Energie und einem elektrischen Signal konfiguriert ist, und
ein Unterstützungsrahmen (132a), der so konfiguriert ist, dass er in einem Gebäude installiert werden kann, und so angeordnet ist, dass er die mindestens eine Förderkomponente unterstützt,
wobei jede Förderkomponente für die Verbindung mit einer entsprechenden Förderkomponente zum Fördern eines Fluids, von Energie oder eines elektrischen Signals von mindestens einem benachbarten Servicemodul der Vielzahl von Servicemodulen (130) konfiguriert ist, wenn diese in einem Gebäude installiert sind, um mindestens einen Teil eines Servicenetzwerks in dem Gebäude zu bilden, und
wobei mindestens eine der Vielzahl von Förderkomponenten eine Belüftungsleitungsbaugruppe (138a, 142a, 144a) umfasst und **dadurch gekennzeichnet, dass** mindestens eine der Vielzahl von Förderkomponenten eine Sammelschiene umfasst.

2. System nach einem der vorstehenden Ansprüche, wobei benachbarte Servicemodule (130), die nebeneinander angeordnet sind, so konfiguriert sind, dass mindestens eine Förderkomponente jedes Servicemoduls (130) für eine direkte Verbindung mit der entsprechenden Förderkomponente eines benachbarten Servicemoduls (130) ausgerichtet ist, um eine direkte Verbindung miteinander herzustellen.

3. System nach einem der vorstehenden Ansprüche, wobei die Servicemodule (130) die gleiche Höhe, Breite und/oder Länge aufweisen.

4. System nach einem der vorstehenden Ansprüche, wobei jeder Unterstützungsrahmen (132a) mindestens eine untere Ebene zum Unterstützen mindestens einer Förderkomponente, eine Zwischenebene zum Unterstützen mindestens einer Förderkomponente und eine obere Ebene zum Unterstützen mindestens einer Förderkomponente umfasst.

5. System nach einem der vorstehenden Ansprüche, wobei jede Förderkomponente einen Verbinder aufweist, der so angeordnet ist, dass er direkt mit einem entsprechenden Verbinder einer entsprechenden Förderkomponente eines benachbarten Servicemoduls (130) verbunden werden kann, das mit der mindestens einen Förderkomponente ausgerichtet ist.

6. System nach Anspruch 1, wobei die Belüftungsleitungsbaugruppe (138a, 142a, 144a) mindestens eine Belüftungsleitung (138a, 142a, 144a) umfasst, die so angeordnet ist, dass sie Luft über mindestens einen Abschnitt des Servicemoduls (130) leitet.

7. System nach Anspruch 6, wobei der mindestens eine Belüftungskanal (138a, 142a, 144a) einen Leitungsverbinder umfasst, der so angeordnet ist, dass er mit einem Leitungsverbinder eines Belüftungskanals (138a, 142a, 144a) des benachbarten Servicemoduls verbunden werden kann.

8. System nach Anspruch 7, wobei der Leitungsverbinder eine Flanschanordnung umfasst.

9. System nach Anspruch 8, wobei die Leitungsverbinder von Belüftungsleitungen (138a, 142a, 144a) benachbarter Servicemodule durch eine Klemme miteinander verbunden sind.

10. System nach einem der vorstehenden Ansprüche, wobei mindestens eine der Vielzahl von Förderkomponenten Rohrleitungen (146a, 148a, 150a, 152a) umfasst, um mindestens ein Fluid zuzuführen, und wobei die Rohrleitungen optional Rohrleitungen umfassen, um mindestens ein Gas zuzuführen, und wobei die Rohrleitungen optional eine Rohrleitung für die Zufuhr von mindestens einem von Stickstoff, Sauerstoff, Kohlendioxid, komprimierter Luft und Erdgas umfasst, und wobei die Rohrleitung optional eine Rohrleitung für die Zufuhr von mindestens einer Flüssigkeit umfasst, und wobei die Rohrleitung optional eine Rohrleitung für die Zufuhr von Wasser umfasst, und/oder wobei die Rohrleitung optional eine Rohrleitung für die Zufuhr eines hydraulischen Fluids umfasst.

11. System nach einem der Ansprüche 10, wobei die Rohrleitung (146a, 148a, 150a, 152a) mindestens einen Rohrverbinder umfasst, der so angeordnet ist, dass er mit einem Rohrverbinder einer Rohrleitung eines angrenzenden Servicemoduls verbunden werden kann, und wobei der Rohrverbinder optional mindestens einen Flanschverbinder, einen Gewindeverbinder, einen Schweißverbinder, einen Kupplungsverbinder, eine Ferrule, einen Tri-Clamp^{™}-Verbinder und/oder eine Presseinsatzanordnung umfasst.

12. System nach einem der vorstehenden Ansprüche, wobei die Sammelschiene einen Sammelschienenverbinder umfasst, der so angeordnet ist, dass er mit einem Sammelschienenverbinder einer Sammelschiene eines benachbarten Servicemoduls verbunden werden kann.

13. System nach einem der vorstehenden Ansprüche, wobei jedes Servicemodul (130) mindestens eines von einer elektrischen Kabelrinne (154a, 156a, 158a, 160a, 162a), einem Kabelkorb, einem Kabelkanal umfasst und/oder wobei jedes Servicemodul (130) optional eine vorbestimmte Länge, Breite und Höhe aufweist.

14. Verfahren zur Installation eines Servicenetzwerks unter Verwendung eines Systems nach einem der vorstehenden Ansprüche, umfassend die Schritte:
Installieren einer Vielzahl von eigenständigen Servicemodulen (130) in einem Gebäude, sodass jedes Servicemodul (130) neben einem anderen Servicemodul angeordnet ist, und
Verbinden von mindestens einer der Belüftungskleitungsbaugruppen und der Sammelschiene eines der Vielzahl von Servicemodulen (130) mit mindestens einer der entsprechenden Belüftungsleitungsbaugruppe und der Sammelschiene eines benachbarten Servicemoduls (130) der Vielzahl von Servicemodulen, um mindestens einen Teil eines Servicenetzwerks in dem Gebäude zu bilden.

## Revendications

1. Système d'installation d'au moins un réseau de services dans un bâtiment, dans lequel le système comprend une pluralité de modules de services (130) autonomes, chaque module de services (130) comportant :
une pluralité de composants d'acheminement, chaque composant d'acheminement étant configuré pour acheminer au moins l'un d'un fluide, d'une puissance et d'un signal électrique, et
un cadre de support (132a) configuré pour être installé dans un bâtiment et agencé pour supporter l'au moins un composant d'acheminement,
dans lequel chaque composant d'acheminement est configuré pour être raccordé à un composant d'acheminement correspondant pour acheminer un fluide, une puissance ou un signal électrique d'au moins un module de services adjacent de la pluralité de modules de services (130) lorsqu'il est installé dans un bâtiment pour former au moins une partie d'un réseau de services dans le bâtiment, et
dans lequel au moins l'un de la pluralité de composants d'acheminement comprend un ensemble de conduits de ventilation (138a, 142a, 144a) et **caractérisé en ce qu'**au moins l'un de la pluralité de composants d'acheminement comprend une barre omnibus.

2. Système selon l'une quelconque des revendications précédentes, dans lequel des modules de services (130) adjacents qui sont positionnés les uns à côté des autres sont configurés de telle sorte qu'au moins un composant d'acheminement de chaque module de services (130) soit aligné pour un raccordement direct avec le composant d'acheminement correspondant d'un module de services (130) adjacent pour un raccordement direct les uns aux autres.

3. Système selon l'une quelconque des revendications précédentes, dans lequel les modules de services (130) ont la même hauteur, la même largeur et/ou la même longueur.

4. Système selon l'une quelconque des revendications précédentes, dans lequel chaque cadre de support (132a) comprend au moins un niveau inférieur pour supporter au moins un composant d'acheminement, un niveau intermédiaire pour supporter au moins un composant d'acheminement et un niveau supérieur pour supporter au moins un composant d'acheminement.

5. Système selon l'une quelconque des revendications précédentes, dans lequel chaque composant d'acheminement a un raccord qui est agencé pour être directement raccordé à un raccord correspondant d'un composant d'acheminement correspondant d'un module de services (130) adjacent qui est aligné avec ledit au moins un composant d'acheminement.

6. Système selon la revendication 1, dans lequel l'ensemble de conduits de ventilation (138a, 142a, 144a) comprend au moins un conduit de ventilation (138a, 142a, 144a) agencé pour acheminer de l'air à travers au moins une partie du module de services (130).

7. Système selon la revendication 6, dans lequel l'au moins un conduit de ventilation (138a, 142a, 144a) comprend un raccord de conduit agencé pour être raccordé à un raccord de conduit d'un conduit de ventilation (138a, 142a, 144a) dudit module de services adjacent.

8. Système selon la revendication 7, dans lequel le raccord de conduit comprend un agencement de bride.

9. Système selon la revendication 8, dans lequel les raccords de conduit des conduits de ventilation (138a, 142a, 144a) de modules de services adjacents sont fixés ensemble par une pince.

10. Système selon l'une quelconque des revendications précédentes, dans lequel au moins l'un de la pluralité de composants d'acheminement comprend des tuyaux (146a, 148a, 150a, 152a) pour l'alimentation en au moins un fluide, et dans lequel les tuyaux comprennent éventuellement des tuyaux pour l'alimentation en au moins un gaz, et dans lequel les tuyaux comprennent éventuellement des tuyaux pour l'alimentation en au moins l'un parmi l'azote, l'oxygène, le dioxyde de carbone, l'air comprimé et le gaz naturel, et dans lequel les tuyaux comprennent éventuellement des tuyaux pour l'alimentation en au moins un liquide, et dans lequel les tuyaux comprennent éventuellement des tuyaux pour l'alimentation en eau, et/ou dans lequel les tuyaux comprennent éventuellement des tuyaux pour l'alimentation en un fluide hydraulique.

11. Système selon l'une quelconque de la revendication 10, dans lequel les tuyaux (146a, 148a, 150a, 152a) comprennent au moins un raccord de tuyau agencé pour être raccordé à un raccord de tuyau des tuyaux d'un module de services adjacent, et dans lequel le raccord de tuyau comprend éventuellement au moins l'un d'un raccord à bride, d'un raccord fileté, d'un raccord de soudure bout à bout, d'un raccord de couplage, d'une virole, d'un raccord tri-clover^{™} et d'un agencement à ajustement serré.

12. Système selon l'une quelconque des revendications précédentes, dans lequel la barre omnibus comprend un raccord de barre omnibus agencé pour être raccordé à un raccord de barre omnibus d'une barre omnibus d'un module de services adjacent.

13. Système selon l'une quelconque des revendications précédentes, dans lequel chaque module de services (130) comprend au moins l'un d'un chemin de câbles électriques (154a, 156a, 158a, 160a, 162a), d'un panier de câbles, d'une goulotte de câbles, et/ou dans lequel chaque module de services (130) a éventuellement une longueur, une largeur et une hauteur prédéterminées.

14. Procédé d'installation d'un réseau de services en utilisant un système selon l'une quelconque des revendications précédentes, comprenant les étapes :
d'installation de la pluralité de modules de services (130) autonomes dans un bâtiment de telle sorte que chaque module de services (130) soit disposé adjacent à un autre module de services, et
de raccordement d'au moins l'un de l'ensemble de conduits de ventilation et de la barre omnibus de l'un de la pluralité de modules de services (130) avec au moins l'un de l'ensemble de conduits de ventilation correspondant et de la barre omnibus d'un module de services (130) adjacent de la pluralité de modules de services pour former au moins une partie d'un réseau de services dans le bâtiment.
